# FASCICULE DE BREVET EUROPEEN

(11) **EP 1 096 806 B1**
(45) Date de publication et mention de la délivrance du brevet: **26.11.2003**
(21) Numéro de dépôt: 00402773.6
(22) Date de dépôt: 09.10.2000
(51) Int. Cl.: H04Q 1/30, H04Q 11/04, H04Q 3/00

(54) **Equipement de télécommunication**
Telekommunikationsausrüstung
Telecommunication equipment

(30) Priorité: 28.10.1999 FR 9913498
(43) Date de publication de la demande: 02.05.2001
(73) Titulaire: ALCATEL, 75008 Paris (FR)
(72) Inventeur: Walter, Olivier, 78000 Versailles (FR); Bachatene, Hélène, 75013 Paris (FR)
(74) Mandataire: Lamoureux, Bernard

(56) Documents cités:
- EP-A- 0 530 443
- US-A- 5 933 784

## Description

L'invention concerne un équipement de télécommunication et notamment un équipement de contrôle d'appels pour centre de commutation.

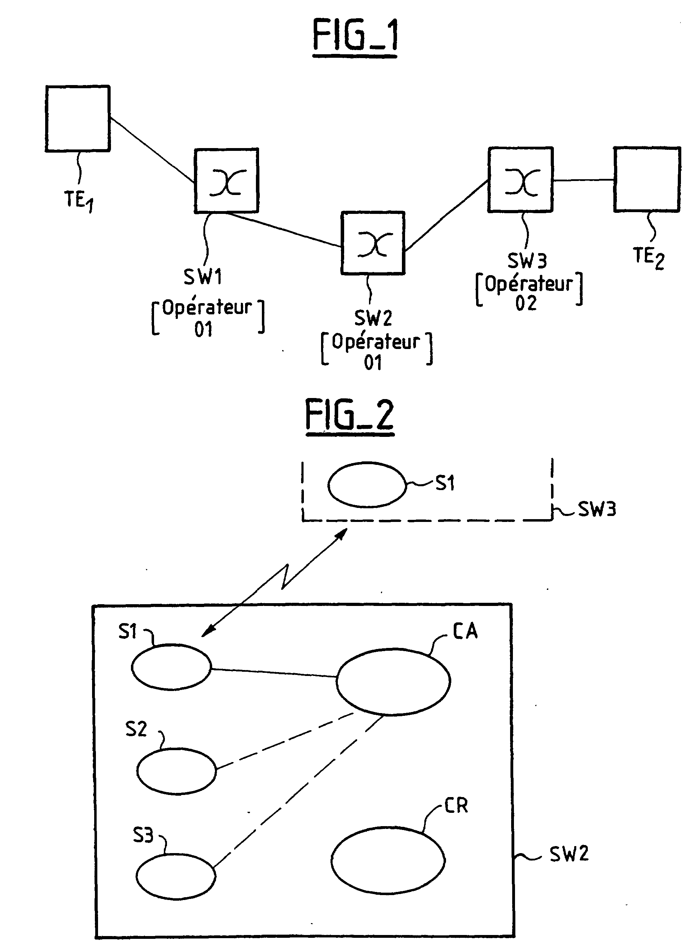

On rappelle, de façon schématique, par la figure 1, l'architecture d'un réseau de télécommunication permettant à un terminal de télécommunication TE1 de communiquer avec un terminal TE2.

Un équipement TE1 est relié à un autocommutateur SW1 d'un opérateur O1. Cet autocommutateur SW1 est relié à un autocommutateur SW2 du même opérateur par exemple, lequel est relié à un autocommutateur SW3 d'un opérateur O2. Un terminal TE2 est relié à cet autocommutateur SW3.

Ainsi, les appels entre les terminaux TE1 et TE2 sont traités par des équipements de télécommunication pour lesquels les standards de signalisation ne sont pas nécessairement les mêmes.

On dispose donc pour cela dans le réseau de centres de commutations ou autocommutateurs tel que les équipements référencés SW1, SW2, SW3. En pratique, il n'y a aucune raison pour que ces équipements soient issus du même fournisseur ou opérateur. Le réseau permet d'acheminer ainsi des flux de données, des flux correspondant à la voix et des flux de contrôle.

Le flux de contrôle concerne les protocoles d'appel. Pour les protocoles d'appel il existe plusieurs normes, la norme B-ISUP de l'International Telecommunication Union (ITU), la norme PNNI de l'ATM Forum (ATM : asynchronous transmission mode) et la norme SS7 de l'European Telecommunication Standards Institute (ETSI).

L'architecture d'un centre de commutation (ou autocommutateur) comprend différents modules S1:
- un module pour traiter la signalisation CA,
- un module pour effectuer du contrôle d'appel,
- un module de gestion des ressources CR, ce module permettant d'allouer des canaux par des liens physiques.

En pratique, le module de signalisation d'un autocommutateur implémente le protocole d'appel ce qui lui permet de communiquer avec un autre autocommutateur.

Le module de contrôle d'appel CA est le noyau de l'ensemble. Il s'agit d'un automate qui crée un processus pour chaque type d'appel reçu.

En pratique, lorsqu'un décrochage de ligne est effectué pour un appel téléphonique, le module de contrôle d'appel crée un processus pour gérer cet appel.

À cette fin, un processus générique (un programme) est prévu dans le module et est apte à créer un autre processus pour gérer l'appel.

Comme il existe plusieurs normes ou standards pour la signalisation, il peut exister de ce fait des modules de signalisation différents correspondant à chacun de ces standards de signalisation au sein d'un même équipement.

On a schématisé cette architecture sur la figure 2. Des modules de signalisation S1, S2, S3 correspondant aux trois standards existants actuellement sont implantés dans un autocommutateur SW2 et relié au noyau qui est le module de gestion des appels CA.

Ce problème est toutefois relativement nouveau. Cependant il devient plus difficile à résoudre dans la mesure où de nouveaux opérateurs sont susceptibles d'intervenir et également dans la mesure où l'on peut désirer faire évoluer les standards existants.
Ainsi, chaque fois qu'un nouveau standard apparaît, l'équipement doit évoluer pour prendre en compte ce nouveau standard.

EP 0 530 443, indiqué comme D1 dans le rapport de recherche, décrit un système qui traîte les requêtes de signalisation par traduction dans une langue commune.

Le but de l'invention est de réduire l'impact d'une nouvelle signalisation sur le contrôle d'appel et à cette fin de rendre le contrôle d'appel le plus indépendant possible.

À titre d'exemple, selon le protocole PNII, lorsqu'une requête est envoyée par le module de contrôle d'appel, la requête peut être acceptée avant analyse du numéro composé alors que dans le protocole B-ISUP, la requête n'est pas acceptée tant que l'analyse du numéro composé n'est pas faite.

La présente invention apporte une solution en proposant une architecture capable d'être adaptée à de nouveaux standards ou de faire évoluer facilement les standards existants.
L'invention s'applique tout particulièrement aux transmission large bande 2M-144 Mbit/s (ATM, vidéo), mais aussi aux transmissions bande étroite (64 kbit/s).

L'invention consiste à prévoir un module de contrôle d'appel CA générique capable de traiter les requêtes communes aux différentes normes et des modules ou composants spécifiques capables de traiter les requêtes spécifiques à chaque norme afin de réduire l'impact d'une nouvelle signalisation sur le module de contrôle d'appel afin de rendre ce dernier le plus indépendant possible.

L'invention a plus particulièrement pour objet un équipement comprenant une unité de service principalement caractérisé en ce que cette unité de service comporte un noyau moteur et des modules reliés à ce noyau, ledit noyau (20) comprenant :
- des moyens pour recevoir les messages de signalisation issus d'un ou plusieurs réseau de signalisation,
- des moyens pour envoyer lesdits messages de signalisation audits modules selon une règle prédéterminée, lesdits modules étant aptes à traiter les signaux de signalisation.

Selon une mise en oeuvre, le noyau comporte des moyens pour traiter certains messages de signalisation.

Les moyens pour recevoir les messages de signalisation comportent une interface de haut niveau apte à fournir un accès au noyau pour le traitement par ce dernier des messages de signalisation standard.

Les moyens pour recevoir les messages de signalisation comportent une interface de bas niveau apte à fournir un accès vers le module apte à traiter le message de signalisation spécifique reçu.

D'autres particularités et avantages de l'invention apparaîtront clairement à la lecture de la description qui est faite ci-après et qui est donnée à titre d'exemple non limitatif et en regard des dessins sur lesquels :
- la figure 1, représente un schéma de principe d'un réseau de télécommunication,
- la figure 2, représente un schéma de l'architecture d'un équipement selon l'état de la technique.
- la figure 3, représente un schéma de l'architecture d'un équipement de télécommunication selon l'invention.

L'exemple de réalisation qui est donné dans la suite illustre pour simplifier une architecture avec deux standards de signalisation corres pondants aux réseaux de signalisation 1, 2 et aux modules de signalisation S1 et S2. Bien entendu l'invention s'applique avantageusement à des situations pour lesquelles on se trouve en présence de plus de deux standards de signalisation, concrètement un nombre de réseaux de signalisation 1 à n et un nombre de modules de signalisation s1 à Sn.

L'équipement de télécommunication EQ permet de mettre en oeuvre le ou les services requis à réception des messages en provenance d'un réseau de signalisation 1 à n.

À cette fin l'équipement comporte des modules de signalisation S1-S2 capables de recevoir des signaux en provenance de modules de signalisation correspondants d'équipements EQ non représentés.

Chaque module S1, S2 comporte les informations de signalisation du standard 1, 2 correspondant, dans une unité logique référencée respectivement SIG1, SIG2. Chaque unité est reliée à un adaptateur A1 pour l'unité SIG1 et A2 pour l'unité SIG2, capable de transformer les requêtes de chaque norme (ou nouveau standard) en requêtes standards pour dialoguer avec l'unité de service CA qui, en pratique est un module de contrôle d'appel.

En effet, comme le dialogue avec cette unité de service CA est normalisé, on utilise les interfaces d'adaptation A1, A2 pour permettre ce dialogue. Il s'agit en pratique d'interfaces logiques permettant de présenter des appels symbolisés par les liens L1 à l'unité de service CA sous un même format qui est le format standard de dialogue, quelque soit les signaux de signalisation, que ces signaux correspondent à une nouvelle norme ou non.

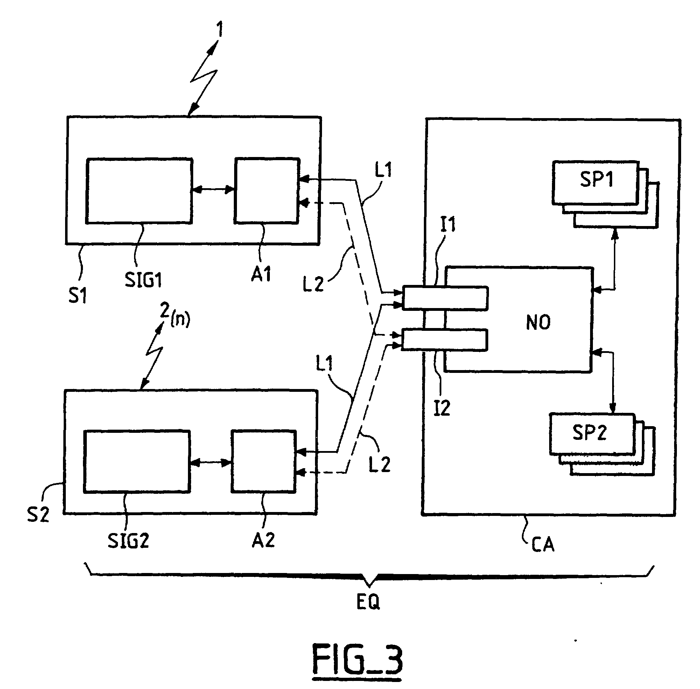

Les liens L2 représentés en pointillé sur la figure 3 correspondent à des fonctions « crochet » présentes dans l'unité de service CA (fonction hook en terminologie anglo-saxonne) aptes à permettre l'adressage à des fonctions spécifiques (par exemple des fonctions génériques, un pointeur sur fonction).

Les requêtes génériques L1 sont gérées par une interface générique I1 définie, dite de haut niveau, tandis que les fonctions « crochet » L2 sont gérées par une interface 12 définie, également dite de bas niveau et qui va être utilisée en outre pour donner des accès aux modules spécifiques SP1, SP2 de l'unité CA dans le cas où des requêtes spécifiques arrivent (ces requêtes étant liées à une nouvelle norme et ne rentrant pas dans une formulation générique pouvant être traitée par le noyau moteur de gestion des appels génériques NO).

Les interfaces de dialogue I1 et I2 avec l'unité de service existent et sont déjà définies par conséquent.

En pratique, 80% des besoins communs à toutes les normes pourront être couverts par l'interface I1 et traitées par le noyau NO et les requêtes ne pouvant pas rentrer dans une formulation générique seront enveloppées dans le format standard de dialogue avec l'unité CA par les adaptateurs A1 et A2 pour être reconnues par l'interface I2 et traitées par le module spécifique qui convient c'est à dire SP1 ou SP2. La détermination du module spécifique qui convient peut être effectuée par l'application de règles prédéterminées. Ces règles peuvent tout simplement être la détermination du standard auquel la requête est conforme.

Le noyau NO est par conséquent apte à traiter toutes les requêtes génériques communes aux différents standards.

Les modules spécifiques SP1, SP2 implémentent chacun les spécificités correspondant à l'évolution d'un standard existant ou à celles d'un nouveau standard n'entrant pas dans le cadre générique.

## Revendications

1. Équipement de télécommunication comprenant une unité de service (CA), apte à communiquer avec un ou plusieurs réseau de signalisation, **caractérisé en ce que** cette unité de service comporte un noyau moteur (NO) et des modules (SP1 et SP2) reliés à ce noyau (NO), ledit noyau **caractérisé en ce qu'**il comprend:
- Des moyens de réception pour recevoir des messages de signalisation correspondant à des requêtes génériques ou spécifiques,
- des moyens pour envoyer lesdites requêtes spécifiques vers lesdits modules (SP1, SP2) selon une règle prédéterminée, lesdits modules étant aptes à traiter lesdites requêtes spécifiques, et,
- des moyens pour traiter lesdites requêtes génériques.

2. Équipement selon la revendication, dans lequel lesdits moyens de réception sont **caractérisés en ce qu'**ils comprennent:
- une interface de haut-niveau pour recevoir les messages de signalisation correspondant à des requêtes génériques, issus d'un
ou plusieurs réseau de signalisation (1, 2)
- une interface de bas-niveau (I2) pour recevoir des messages de signalisation correspondant à des requêtes spécifiques, issus d'un ou plusieurs réseau de signalisation (1, 2).

## Patentansprüche

1. Telekommunikationsausrüstung, aufweisend eine Diensteinheit (CA), die fähig ist, mit einem oder mehreren Signalisierungsnetzen zu kommunizieren, **dadurch gekennzeichnet, dass** diese Diensteinheit einen Treiberkern ("noyau moteur") (NO) und Module (SP1 und SP2) aufweist, die mit diesem Kern (NO) verbunden sind, wobei dieser Kern **dadurch gekennzeichnet ist, dass** er Folgendes aufweist:
- Empfangsvorrichtungen zum Empfangen von Signalisierungsnachrichten, die allgemeinen oder spezifischen Anforderungen entsprechen;
- Vorrichtungen zum Senden dieser spezifischen Anforderungen an die genannten Module (SP1, SP2) nach einer zuvor festgelegten Regel, wobei diese Module fähig sind, die spezifischen Anforderungen zu verarbeiten; und
- Vorrichtungen zum Verarbeiten der allgemeinen Anforderungen.

2. Ausrüstung nach dem Anspruch, bei der die genannten Empfangsvorrichtungen **dadurch gekennzeichnet sind, dass** sie Folgendes aufweisen:
- eine Schnittstelle auf hoher Ebene, um die Signalisierungsnachrichten zu empfangen, die allgemeinen Anforderungen entsprechen und aus einem oder mehreren Signalisierungsnetzen (1,2) stammen;
- eine Schnittstelle auf niedriger Ebene (I2), um die Signalisierungsnachrichten zu empfangen, die spezifischen Anforderungen entsprechen und aus einem oder mehreren Signalisierungsnetzen (1,2) stammen.

## Claims

1. Telecommunications equipment including a service unit (CA) adapted to communicate with one or more signaling networks, **characterized in that** said service unit includes a driver core (NO) and modules (SP1 and SP2) connected to said core (NO), said core being **characterized in that** it includes:
- receiving means for receiving signaling messages corresponding to generic or specific requests,
- sending means for sending specific requests to said modules (SP1, SP2) in accordance with a predetermined rule, said module being adapted to process said specific requests, and
- processing means for processing said generic requests.

2. Equipment according to claim 1, wherein said receiving means are **characterized in that** they include:
- a high-level interface for receiving signaling messages corresponding to generic requests from one or more signaling networks (1, 2), and
- a low-level interface (I2) for receiving signaling messages corresponding to specific requests from one or more signaling networks (1, 2).
